# EUROPÄISCHE PATENTSCHRIFT

(11) **EP 4 043 781 B1**
(45) Veröffentlichungstag und Bekanntmachung des Hinweises auf die Patenterteilung: **11.10.2023**
(21) Anmeldenummer: 22155450.4
(22) Anmeldetag: 07.02.2022
(51) Int. Cl.: F21S 2/00, A01G 9/24, F21V 23/00, F21V 23/06, F21V 31/00, F21S 8/06, F21W 131/40, F21Y 115/10

(54) **FEUCHTRAUMLEUCHTE, INSBESONDERE GEWÄCHSHAUSLEUCHTE**
WETROOM LAMP, IN PARTICULAR GREENHOUSE LIGHT
LUMINAIRES POUR ESPACES HUMIDES, EN PARTICULIER LUMINAIRES POUR SERRES

(30) Priorität: 10.02.2021 DE 102021103140
(43) Veröffentlichungstag der Anmeldung: 17.08.2022
(73) Patentinhaber: Remus, Uwe, 50996 Köln (DE); Pfeiffer, Michael, 41751 Viersen (DE)
(72) Erfinder: Remus, Uwe, 50996 Köln (DE); Pfeiffer, Michael, 41751 Viersen (DE)
(74) Vertreter: dompatent von Kreisler Selting Werner - Partnerschaft von Patent- und Rechtsanwälten mbB

(56) Entgegenhaltungen:
- US-A1- 2012 043 907
- US-A1- 2015 184 837
- US-A1- 2016 178 179

## Beschreibung

Die Erfindung betrifft eine Feuchtraumleuchte, die spritzwassergeschützt ist und insbesondere als Gewächshausleuchte zur Förderung des Pflanzenwachstums eingesetzt werden kann. Sie kann aber ebenso gut auch für die Ausleuchtung von anderen Räumen mit erhöhter Luftfeuchtigkeit eingesetzt werden, wie beispielsweise in Autowaschanlagen, Wäschereien o.dgl. industrieller Räumlichkeiten, aber auch im Privatbereich.

Die Anwendung von Leuchten ist grundsätzlich sehr vielfältig. So existieren beispielsweise Arbeitsplatzleuchten, Leuchten für die Raumbeleuchtung und Leuchten, deren Licht für andere Zwecke eingesetzt werden, wie beispielsweise im Falle eines Gewächshauses für das Pflanzenwachstum (siehe US-A-2012/0043907 und US-A-2016/0178179).

Um veränderten Bedingungen bereits installierter Leuchten in kundenfreundlicher Weise besser gerecht werden zu können, ist es zweckmäßig, Leuchtensysteme modular zu gestalten. Neben einer vereinfachten Auswechselbarkeit einzelner Komponenten derartiger Leuchtensysteme bietet ein modularer Aufbau auch insoweit Vorteile, als Leuchtenkomponenten weiterverwendet werden können, wenn beispielsweise das Leuchtensystem vergrößert werden soll, und zwar unter Verwendung bereits existierender Leuchtengehäuse und deren Lampen und der Steuerung für diese.

Aus US-A-2015/0184837 ist eine LED-Leuchte bekannt.

Aufgabe der Erfindung ist es, eine einfache und bequem erweiterbare Konstruktion für modulare Feuchtraumleuchten für die verschiedensten Anwendungsfälle zu schaffen.

Zur Lösung dieser Aufgabe wird mit der Erfindung eine Feuchtraumleuchte, insbesondere Gewächshausleuchte, vorgeschlagen, die versehen ist mit
- einem Leuchtengehäuse,
- mehreren in das Leuchtengehäuse einsetzbaren Lampenmodulen,
- wobei jedes Lampenmodul eine Lichtquelle mit einer Vielzahl von LEDs, ein zur Lichtquelle führendes Anschlusskabel, einen an einem hinteren Ende des Lampenmoduls angeordneten Kühlkörper zum Kühlen der Lichtquelle und ein an einem vorderen Ende des Lampenmoduls angeordnetes optisches Element zum Ausstrahlen des Lichts der Lichtquelle in einen räumlichen Ausstrahlwinkel aufweist,
- wobei das Leuchtengehäuse eine Oberseiten-Gehäusewand, eine Unterseiten-Gehäusewand und eine diese beiden Gehäusewände verbindende, den Zwischenraum zwischen den beiden Gehäusewänden nach außen spritzwassergeschützt verschließende, umlaufende Gehäuseseitenwand aufweist,
- wobei in der Oberseiten-Gehäusewand und in der Unterseiten-Gehäusewand mehrere Paare von miteinander fluchtenden, jeweils einen Öffnungsrand aufweisenden Aufnahmeöffnungen für jeweils ein Lampenmodul ausgebildet sind,
- einem pro Paar von Aufnahmeöffnungen zwischen der Oberseiten-Gehäusewand und der Unterseiten-Gehäusewand angeordneten, die beiden Aufnahmeöffnungen umgebenden Zylinderring zum spritzwassergeschützten Verschließen des Zwischenraums zwischen der Oberseiten-Gehäusewand und der Unterseiten-Gehäusewand des Leuchtengehäuses,
- wobei jedes Lampenmodul in ein Paar von Aufnahmeöffnungen einsetzbar ist, wobei das Lampenmodul an seinem vorderen Ende auf zumindest einem Abschnitt des Öffnungsrandes der Aufnahmeöffnung der Unterseiten-Gehäusewand aufliegt und sein hinteres Ende mit dem Kühlkörper über die Oberseiten-Gehäusewand überstehend angeordnet ist und gegebenenfalls die optische Linse nach unten über die Unterseiten-Gehäusewand vorsteht,
- einer Energieversorgungs- und Steuereinheit für die Lampenmodule, die außerhalb des Leuchtengehäuses angeordnet ist und
- mehreren außen an dem Leuchtengehäuse angeordneten und elektrisch mit der Energieversorgungs- und Steuereinheit verbundenen elektrischen Lampenmodul-Verbindern mit jeweils einer Steckerbuchse und einem von der Steckerbuchse lösbaren und mit dieser verbindbaren Stecker für jedes Lampenmodul zum Verbinden des Anschlusskabels jedes Lampenmoduls mit der Energieversorgungs- und Steuereinheit.

Die Erfindung sieht ein insbesondere leichtgewichtiges Leuchtengehäuse für eine Feuchtraumleuchte vor, das sich auf einfache Weise als vergleichsweise flaches, scheiben- bzw. plattenförmiges Gehäuses konstruieren lässt. Das Leuchtengehäuse der erfindungsgemäßen Feuchtraumleuchte weist eine Oberseiten-Gehäusewand und eine Unterseiten-Gehäusewand auf, die von einer umlaufenden und gegebenenfalls mehrteiligen Gehäuseseitenwand miteinander verbunden sind, und zwar gegen von außen kommendes Spritzwasser geschützt. Zweckmäßigerweise ist die Gehäuseseitenwand als einteiliger Rahmen ausgebildet, der beispielsweise rund oder mehreckig und insbesondere viereckig sowie vorzugsweise quadratisch sein kann. Von oben und von unten sind dann auf den Rahmen die Oberseiten- und die Unterseiten-Gehäusewände angesetzt und beispielsweise durch Verschraubungen gesichert. Die spritzwassergeschützte Ausgestaltung erfolgt beispielsweise durch elastische Dichtelemente wie insbesondere Dichtringe oder Dichtbänder, oder durch einen Kleber. Die umlaufende Gehäuseseitenwand kann aber auch mehrteilig ausgebildet sein, was beispielsweise bei einem mehreckigen Leuchtengehäuse von Vorteil sein kann. Die einzelnen Gehäuseseitenwandabschnitte dabei auf Gehrung ausgebildet aufeinanderfolgend angeordnet sein, wobei die Eckenbereiche der umlaufenden Gehäuseseitenwand ebenfalls spritzwassergeschützt ausgebildet sind, was beispielsweise durch Dichtelemente oder auch Kleber erfolgen kann.

Das zuvor beschriebene Leuchtengehäuse ist mit mehreren Paaren aus miteinander fluchtenden Aufnahmeöffnungen für jeweils ein Lampenmodul versehen. Pro Paar befindet sich eine Aufnahmeöffnung in der Oberseiten-Gehäusewand, während sich die zweite Aufnahmeöffnung in der Unterseiten-Gehäusewand befindet. Beide Aufnahmeöffnungen fluchten miteinander, wobei die Aufnahmeöffnung in der Unterseiten-Gehäusewand in Projektion beider Aufnahmeöffnungen betrachtet einen Öffnungsrandabschnitt aufweist, innerhalb dessen sie über den Öffnungsrand der Aufnahmeöffnung in der Oberseiten-Gehäusewand übersteht. Hierdurch ergibt sich nun eine Stütz- oder Auflagefläche, wenn ein Lampenmodul von oberhalb des Leuchtengehäuses in eine der Aufnahmeöffnungen der Oberseiten-Gehäusewand eingesetzt wird, so dass jedes Lampenmodul werkzeuglos in dem Leuchtengehäuse angeordnet ist, d. h. ohne mit dem Lampengehäuse verschraubt oder durch andere Befestigungs- oder Montagelemente fest verbunden zu sein.

Erfindungsgemäß lassen sich nun mehrere Lampenmodule in das Leuchtengehäuse, wie oben beschrieben, einsetzen. Die Lampenmodule liegen dabei mit einem Vorsprungsbereich am vorderen Ende auf dem mindestens einen überstehenden Abschnitt des Öffnungsrandes der Aufnahmeöffnung in der Unterseiten-Gehäusewand auf. Die Ausrichtung der Lampenmodule beim Einsetzen in das Leuchtengehäuse kann durch eine mechanische Kodierung vorgegeben sein.

Jedes Lampenmodul umfasst eine LED-Lichtquelle mit einer Vielzahl von LEDs. Die Lichtquelle kann beispielsweise als LED-COB (Chip-On-Board), also als LED-Chip ausgebildet sein. Alternativ ist es aber auch möglich, mehrere beispielsweise als SMD-Bauteile ausgebildete LEDs auf einer Platine anzuordnen. Sofern nachfolgend von LED-Chip als Lichtquelle die Rede ist, ist damit sowohl eine Ausführung in COB-Technologie als auch in der Ausführung mit mehreren LED-Bauteilen auf einer Platine gemeint.

Zur Kühlung des LED-Chips dient ein typischerweise zylindrisch ausgebildeter Kühlkörper mit einer Vielzahl von Kühlfahnen. Dieser Kühlkörper ist thermisch gut an die Lichtquelle angebunden. Benachbart zur Lichtquelle befindet sich ein optisches Element, das seinerseits vorteilhafterweise am Kühlkörper befestigt sein kann und refraktiv und/oder reflektiv arbeitet. Das optische Element bildet sozusagen das vordere Ende des Lampenmoduls, dessen hinteres Ende von dem Kühlkörper bzw. dessen dem LED-Chip abgewandten Ende gebildet wird. Aus dem Kühlkörper und insbesondere aus dem Ende des Kühlkörpers führt das Anschlusskabel heraus, das für die elektrische Verbindung zur LED-Lichtquelle sorgt. Das Anschlusskabel ist ebenfalls spritzwassergeschützt an dem Kühlkörper angeordnet und weist typischerweise einen Stecker auf, der ebenfalls gegen Spritzwasser geschützt am Anschlusskabel angeordnet ist.

An dem Leuchtengehäuse und insbesondere an dessen Oberseiten-Gehäusewand befinden sich elektrische Lampenmodul-Verbinder, und zwar pro Paar von Aufnahmeöffnungen jeweils einer. Jeder Lampenmodul-Verbinder weist eine Steckerbuchse und einen Stecker auf. Typischerweise ist die Steckerbuchse am Leuchtengehäuse spritzwassergeschützt befestigt, während sich der Stecker am Anschlusskabel des Lampenmoduls befindet. Innerhalb des Leuchtengehäuses befindet sich eine Verkabelung, die die elektrische Verbindung von einer Energieversorgungs- und Steuereinheit zu den Lampenmodul-Verbindern bildet. Erfindungsgemäß ist die Energieversorgungs- und Steuereinheit als externes und von dem Leuchtengehäuse getrennt ausgeführtes Bauteil ausgebildet, in dem sich elektrische und elektronische Komponenten wie beispielsweise ein Netzteil und ein Treiber sowie eine Steuerung mit beispielsweise Drahtlos-Schnittstelle befinden. Im Leuchtengehäuse können sich Spannungswandler, insbesondere Niedervolt-Gleichspannungswandler befinden, die von der Energieversorgungs- und Steuereinheit mit Energie versorgt und angesteuert werden.

Wie bereits oben beschrieben, ist das Leuchtengehäuse spritzwassergeschützt. Zwischen den Aufnahmeöffnungen jedes Paars von Aufnahmeöffnungen ist der Zwischenraum zwischen der Oberseiten-Gehäusewand und der Unterseiten-Gehäusewand, also der Zugang über die Aufnahmeöffnungen zum Innern des Leuchtengehäuses durch jeweils einen Zylinderring verschlossen, und zwar ebenfalls spritzwassergeschützt, was wiederum beispielsweise durch entsprechende elastische Dichtringe oder elastische Dichtbänder oder durch Kleber erfolgen kann. Somit kann also weder über die umlaufende Gehäuseseitenwand noch über die durch die Paare von Aufnahmeöffnungen gebildeten Durchlässe des Leuchtengehäuses in dieses Spritzwasser oder Luftfeuchtigkeit eindringen. Das hat den Vorteil, dass es einer Abdichtung zwischen Leuchtengehäuse und den Lampenmodulen bei deren Einsatz in dem Leuchtengehäuse nicht bedarf. Diese Spritzwasserdichtigkeit ist vorzugsweise dann auch gegeben, wenn beispielsweise ein Paar von Aufnahmeöffnungen nicht durch ein Lampenmodul besetzt ist. Der Anwender kann also das Leuchtengehäuse auch betreiben, wenn weniger Lampenmodule als Aufnahmeöffnungspaare eingesetzt werden.

Der Vorteil der externen Energieversorgungs- und Steuereinheit hat ferner den Vorteil, dass sich im Leuchtengehäuse Kabel oder elektrische Komponenten befinden, die für Niedervoltspannungen von einigen wenigen zig Volt ausgelegt sind. Die Anforderungen an den Spritzwasserschutz und den Schutz vor dem Eindringen von Feuchtigkeit ist bei diesen vergleichsweise niedrigen Gleichspannungsbereichen wesentlich einfacher zu realisieren, als wenn das Leuchtengehäuse selbst mit Netzspannung betrieben werden müsste. Die Lampenmodul-Steckverbinder sind ebenfalls spritzwassergeschützt ausgeführt. Derartige elektrische Verbinder aus Steckerbuchse und Stecker sind beispielsweise im Handel erhältlich. Auch die elektrische Kabelverbindung zwischen dem externen Bauteil mit der Energieversorgungs- und Steuereinheit zum Leuchtengehäuse erfolgt zweckmäßigerweise mit Hilfe eines elektrischen Zuleitungsverbinders, dessen Steckerbuchse ebenfalls zweckmäßigerweise am Leuchtengehäuse montiert ist, und zwar insbesondere mit Vorteil an der Oberseiten-Gehäusewand, so dass sich an dem Zuleitungskabel dann entsprechend der Stecker des Zuleitungsverbinders befindet. Dasjenige Teil des Zuleitungsverbinders, das am Leuchtengehäuse angeordnet ist, ist dort gegen Spritzwasser geschützt angeordnet und kann eine Abdeckkappe aufweisen.

Die Auswechslung einzelner Lampenmodule gestaltet sich bei der erfindungsgemäße Feuchtraumleuchte denkbar einfach. Es muss lediglich der dem auszuwechselnden Lampenmodul zugeordnete elektrische Lampenmodul-Verbinder gelöst, das Lampenmodul nach oben hin aus dem Leuchtengehäuse entnommen, ein anderes Lampenmodul von oben in das Leuchtengehäuse eingesetzt und anschließend angeschlossen werden. Sofern der Platz für ein Lampenmodul nicht belegt werden soll, kann derjenige Teil des diesem Lampenmodul zugeordneten Lampenmodul-Verbinders (typischerweise handelt es sich hierbei um die Steckerbuchse), der am Gehäuse angeordnet ist, durch eine Abdeckkappe spritzwassergeschützt abgedichtet werden.

Besonders vorteilhaft ist es, die Lampenmodule einer bestehenden erfindungsgemäßen Feuchtraumleuchte für ein Leuchtengehäuse zu verwenden, das beispielsweise für eine größere Anzahl von Lampenmodulen ausgelegt ist. So ist es möglich, Leuchtengehäuse der vorstehend genannten Art mit unterschiedlicher Anzahl an Aufnahmeöffnungspaaren anzubieten, so dass Kunden, die über eine erfindungsgemäße Feuchtraumleuchte bereits verfügen, im Bedarfsfalle die bereits von dem Kunden verwendeten Lampenmodule für ein Leuchtengehäuse verwenden können, das für eine größere Anzahl von Lampenmodulen ausgelegt ist. Der Kunde benötigt dann lediglich das größere Leuchtengehäuse und einige zusätzliche Lampenmodule, kann also die bereits existierenden Lampenmodule weiterverwenden. Gegebenenfalls wird für die Energieversorgung und Steuerung einer Feuchtraumleuchte mit eine größere Anzahl von Lampenmodulen aufweisenden Leuchtengehäuse eine entsprechend größer dimensionierte Energieversorgungs- und Steuereinheit benötigt.

Es ist auch möglich, dass in ein und demselben Leuchtengehäuse die Lampenmodule gegen Lampenmodule eines anderen Typs, bei dem beispielsweise Licht in einer anderen Lichtfarbe abgegeben wird, ersetzt werden können.

Die Ausgestaltung der Geometrie der Aufnahmeöffnungen ist an die Kontur und insbesondere an die Kontur der umlaufenden Außenseite der Lampenmodule angepasst. Das flachbauende Leuchtengehäuse hat den Vorteil, dass der Kühlkörper über den weitaus größten Teil seiner Erstreckung zu seinem hinteren Ende hin nach oben über das Leuchtengehäuse übersteht und damit effizient thermisch an die Umgebungsluft angekoppelt ist.

Die Lampenmodule selbst sind ebenfalls spritzwasser- und feuchtigkeitsgeschützt ausgebildet. Dies bezieht sich insbesondere auf die Montage der Lichtquelle, die durch die Verbindung mit dem Kühlkörper zur Außenseite des Lampenmoduls spritzwasser- und feuchtigkeitsdicht verschlossen ist. Die Abstützung des Lampenmoduls am bzw. im Leuchtengehäuse erfolgt vorteilhafterweise am vorderen Ende des Kühlkörpers, dessen hinteres Ende, wie zuvor beschrieben, oben über das Leuchtengehäuse übersteht. An diesem vorderen Ende des Kühlkörpers ist das optische Element angeordnet und befestigt. Alternativ kann das optische Element die Auflagefläche aufweisen, über die sich das Lampenmodul am Leuchtengehäuse abstützt. Zwischen dem Lampenmodul und der Abstützfläche am Leuchtengehäuse kann ein Dichtelement angeordnet sein (beispielsweise Gummiring (O-Ring oder Flachring)).

Wie bereits oben erwähnt, liegt jedes Lampenmodul dann, wenn es in das Leuchtengehäuse eingesetzt ist, mit mindestens einer Stützfläche an seinem vorderen Ende auf mindestens einer Auflagefläche in mindestens einem Öffnungsrandabschnitt der Aufnahmeöffnung der Unterseiten-Gehäusewand auf. Vorteilhaft ist es, wenn die Aufnahmeöffnung in der Unterseiten-Gehäusewand mindestens zwei vorzugsweise einander gegenüberliegende und insbesondere diametral gegenüberliegende Öffnungsrandabschnitte aufweist, die jeweils bis über den Öffnungsrand der Aufnahmeöffnung der Oberseiten-Gehäusewand vorstehen und jeweils eine Auflagefläche für ein in die beiden Aufnahmeöffnungen einsetzbares Lampenmodul bilden.

Beispielsweise kann die Aufnahmeöffnung in der Oberseiten-Gehäusewand kreisrund ausgebildet sein, während die Aufnahmeöffnung in der Unterseiten-Gehäusewand zwei diametral gegenüberliegenden geradlinige und zueinander parallele Öffnungsrandabschnitte aufweist, also in gewisser Weise ovalförmig ist. Hinzu kommt, dass die Aufnahmeöffnung in der Unterseiten-Gehäusewand derart ausgebildet ist, dass die optische Linse des Lampenmoduls über die Unterseiten-Gehäusewand nach unten übersteht. Die optische Linse dient unter anderem der Definition des Raumwinkels, unter dem das Licht der LEDs in die Umgebung abgestrahlt werden soll. Lampenmodule mit in dieser Hinsicht unterschiedlichen optischen Eigenschaften können also weiterhin austauschweise oder in Kombination miteinander verwendet werden, wenn der sogenannte Formfaktor der Lampenmodule gleichbleibt.

Wie oben erwähnt, ist es unter anderem wegen den geringeren Anforderungen an die Spannungsfestigkeit des Leuchtengehäuses, aber auch auf Grund der Wärmeentwicklung und der damit verbundenen Wärmeabfuhr von Vorteil, wenn die Energieversorgungs- und Steuereinheit als externes Bauteil ausgeführt ist. Nichtsdestotrotz aber kann es zweckmäßig sein, wenn in dem Leuchtengehäuse, mit den elektrischen Lampenmodul-Verbindern verbundene Treiberschaltungen (als z.B. Gleichspannungswandler) für jeweils ein Lampenmodul oder jeweils einer Gruppe von Lampenmodulen angeordnet sind, wobei die Treiberschaltungen von der externen Energieversorgungs- und Steuereinheit ansteuerbar sind. Die Treiberschaltungen sind also zwischen den Zuleitungsverbinder und die Lampenmodul-Verbinder geschaltet und mit deren Steckergehäusen elektrisch verbunden, und zwar beispielsweise wie bei einer DALI-Lichtsteuerung.

Die erfindungsgemäße Feuchtraumleuchte ist insbesondere zum Herabhängen von einer Decken- oder Haltekonstruktion geeignet. Neben diesbezüglich einsetzbaren starren Anbringungseinheiten wie beispielsweise einem Stab eignen sich hier auch flexible Anbringungseinheiten wie beispielsweise Schnüre, Ketten, Bänder o.dgl. Strangelemente. Bei Einsatz als Gewächshausleuchte zur Förderung des Pflanzenwachstums befindet sich das Leuchtengehäuse dann an beispielsweise Schnüren herabhängend in einer Höhe, die den einfachen Austausch und das einfache Auswechseln der Lampenmodule erlaubt.

Die Energieversorgungs- und Steuereinheit weist, wie bereits oben beschrieben, ihrerseits ein eigenständiges Gehäuse auf, das getrennt vom Leuchtengehäuse ausgeführt ist. Bei diesem Gehäuse handelt es sich zweckmäßigerweise um ein leichtgewichtiges und tragbares sowie vornehmlich aufklappbares Gehäuse, für das beispielsweise im Handel erhältliche Werkzeugkoffer aus Kunststoff oder kleinformatige Präsentierkoffer für Gegenstände genutzt werden können. Das Gehäuse kann beispielsweise auf dem Boden oder an der Wand oder an anderen Einrichtungsgegenständen des Raums, in dem die Feuchtraumleuchte genutzt wird, positioniert werden. Die Verlustwärmeabführung lässt sich in vorteilhafter Weise dadurch realisieren, dass in dem Gehäuse ein Lüfterrad angeordnet ist, das für eine Verwirbelung der Luft im Gehäuse führt. Die verwirbelte Luft wird dann zweckmäßigerweise über mindestens einen Abluftventilator nach außen abgeführt. Vorteilhafterweise kann auch für eine Zuluftführung gesorgt werden, was beispielsweise dadurch erfolgt, dass das Gehäuse mindestens eine Zuluftöffnung aufweist.

Bei Ausbildung des Gehäuses der Energieversorgungs- und Steuereinheit als aufklappbare Box ist es ferner zweckmäßig, wenn die elektrischen und elektronischen Komponenten der Energieversorgungs- und Steuereinheit in dem Unterteil der aufklappbaren Box untergebracht sind, während sich in dem aufklappbaren Deckelteil an dessen Innenseite das Verwirbelungslüfterrad im Wesentlichen freiliegend befindet und darüber hinaus der mindestens eine Abluftventilator angeordnet ist.

Zweckmäßigerweise ist das Unterteil der Box mit einer Bodenwand und einer von dieser aufragenden Seitenwand versehen, wobei die mindestens eine Zuluftöffnung in der Seitenwand des Unterteils ausgebildet ist. Alternativ kann auch die Bodenwand mit der mindestens einen Zuluftöffnung versehen sein.

In weiterer zweckmäßiger Ausgestaltung der Erfindung kann vorgesehen sein, dass das Deckelteil und das Unterteil der Box jeweils einen Rand aufweisen, wobei diese Ränder im geschlossenen Zustand der Box einander benachbart und/oder aneinanderliegend angeordnet sind, und dass die mindestens eine Zuluftöffnung als Spalt zwischen den Rändern von Unterteil und Oberteil der Box oder als eine Aussparung in mindestens einem der Ränder von Unterteil und Oberteil der Box ausgebildet ist.

Die erfindungsgemäße Feuchtraumleuchte ist, wie bereits oben beschrieben, zweckmäßigerweise Bestandteil eines modularen Feuchtraumleuchtensystems insbesondere für Gewächshäuser, wobei dieses System mehrere Leuchtengehäuse unterschiedlicher Dimensionierungen aufweist, die für eine unterschiedliche Anzahl von Lampenmodulen ausgelegt sind und dementsprechend eine unterschiedliche Anzahl von Aufnahmeöffnungspaaren aufweist. Über sämtliche Leuchtengehäuse hinweg betrachtet ist die Ausgestaltung der Aufnahmeöffnungspaare jeweils gleich, so dass ebenfalls gleich ausgestaltete Lampenmodule für sämtliche Leuchtengehäuse verwendet werden können.

Von Vorteil kann es sein, wenn das erfindungsgemäße modulare Feuchtraumleuchtensystem den entsprechenden elektrischen Anforderungen entsprechend für jede Leuchtengehäusegröße unterschiedlich leistungsstarke Energieversorgungs- und Steuereinheiten umfasst. So ist beispielsweise die Nenn-Ausgangsleistung der Energieversorgungs- und Steuereinheit für ein Leuchtengehäuse mit beispielsweise 16 Lampenmodulen größer als im Falle der Energieversorgung eines Leuchtengehäuses, das für beispielsweise vier oder neun Lampenmodule ausgelegt ist. Die an den Leuchtengehäusen angeordneten Zuleitungsverbinder können mechanische Kodierungen aufweisen, um zusätzlich zu garantieren, dass an ein Leuchtengehäuse nur die für die Anzahl der Lampenmodule ausgelegte Energieversorgungs- und Steuereinheit angeschlossen werden kann.

Die Erfindung wird nachfolgend anhand eines Ausführungsbeispiels und unter Bezugnahme auf die Zeichnung näher erläutert. Im Einzelnen zeigen dabei:
- Fig. 1: eine perspektivische Ansicht auf die Feuchtraumleuchte gemäß einem Ausführungsbeispiel der Erfindung,
- Fig. 2: eine Draufsicht auf die Oberseite des Leuchtengehäuses der Fechtraumleuchte in Richtung des Pfeils II der Fig. 1,
- Fig. 3: eine Draufsicht ähnlich der wie in Fig. 2, jedoch ohne eingesetzte Lampenmodule zur Verdeutlichung der Auflageflächen für die Lampenmodule,
- Fig. 4: eine Seitenansicht eines Lampenmoduls in Explosionsdarstellung,
- Fig. 5: eine Vorderansicht auf ein Lampenmodul gemäß dem Pfeil V der Fig. 4,
- Fig. 6: eine perspektivische Ansicht auf die Oberseite des Leuchtengehäuses ohne Lampenmodule zur Verdeutlichung der spritzwassergeschützten Abdichtung des Leuchtengehäuses,
- Fig. 7: eine perspektivische Darstellung eines Zylinderrings, wie er jeweils zwischen den beiden Aufnahmeöffnungen eingesetzt ist, um das Leuchtengehäuse gegen Spritzwasser zu schützen,
- Fig. 8: eine perspektivische Darstellung der als Koffer ausgebildeten Box des Gehäuses für die Energieversorgungs- und Steuereinheit,
- Fig. 9: die Darstellung des Koffers gemäß Fig. 8 im aufgeklappten Zustand und
- Fig. 10: ein Blockschaltbild der Verschaltung der Komponenten der Energieversorgungs- und Steuereinheit.

Bevor nachfolgend auf die einzelnen Merkmale des Ausführungsbeispiels der erfindungsgemäßen Energieversorgungsvorrichtung eingegangen wird, wird als Anwendungsbeispiel ein modulares Feuchtraumleuchtensystem beschrieben, bei dem die erfindungsgemäße Energieversorgungsvorrichtung eingesetzt werden kann.

Neben der eigentlichen Energieversorgung für die jeweilige elektrische Vorrichtung kann die erfindungsgemäße Vorrichtung Komponenten für die Steuerung der jeweiligen elektrischen Vorrichtung enthalten, wie es vorteilhafterweise bei dem hier beschriebenen Anwendungsbeispiel des Einsatzes der erfindungsgemäßen Energieversorgungsvorrichtung bei einem Feuchtraumleuchtensystem der Fall ist.

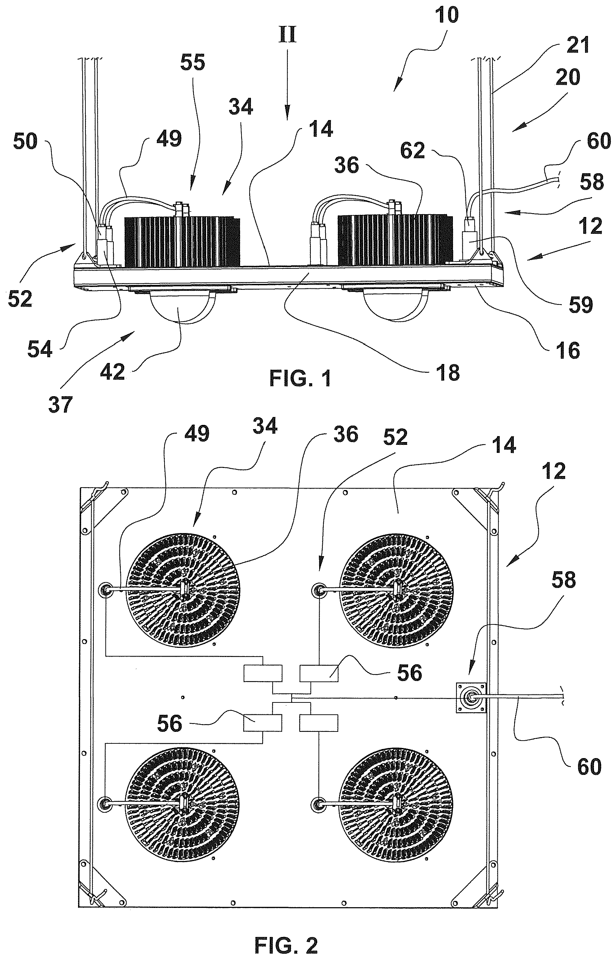

In den Fign. 1 bis 3 sowie 5 ist eine Feuchtraumleuchte 10 gezeigt, die ein vergleichsweise flaches und in diesem Ausführungsbeispiel quadratisches Leuchtengehäuse 12 aus beispielsweise Metall aufweist. Das Leuchtengehäuse 12 weist eine plattenförmige Oberseiten-Gehäusewand 14 und eine ebenfalls als Platte ausgebildete Unterseiten-Gehäusewand 16 auf, zwischen denen sich eine umlaufende Gehäuseseitenwand 18 aus z.B. vier auf Gehrung ausgebildeten Segmenten befindet. Diese drei Komponenten sind spritzwassergeschützt miteinander verbunden, beispielsweise miteinander verschraubt, wobei zusätzlich noch eine Verklebung der Komponenten vorgesehen ist. Alternativ können zwischen den beiden Gehäusewänden und der Gehäuseseitenwand elastische Dichtelemente angeordnet sein. Das Leuchtengehäuse 12 hängt in diesem Ausführungsbeispiel an Strangelementen 20 in Form von Bändern oder Seilen 21 von einer Decken- oder anderen Haltekonstruktion herab.

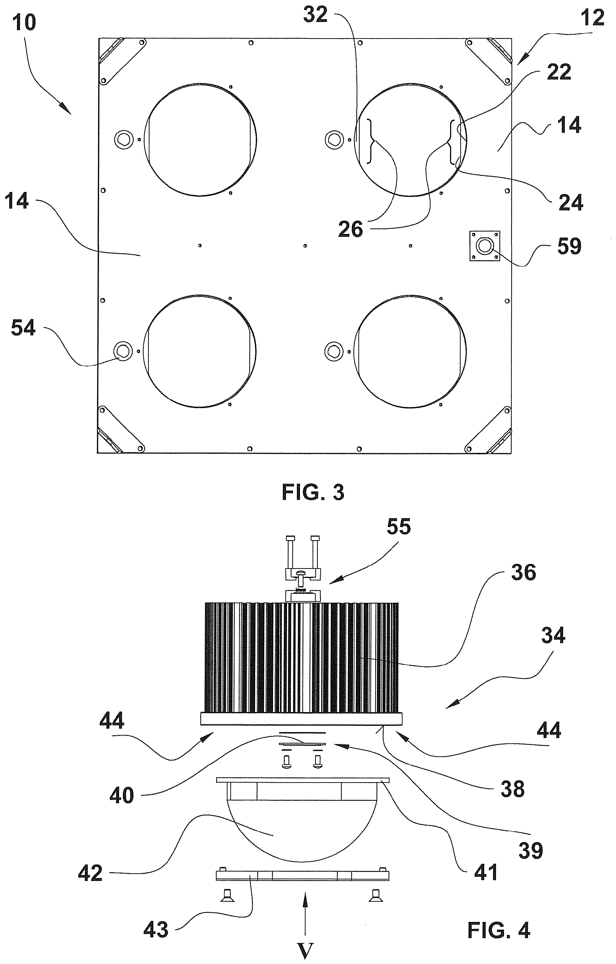

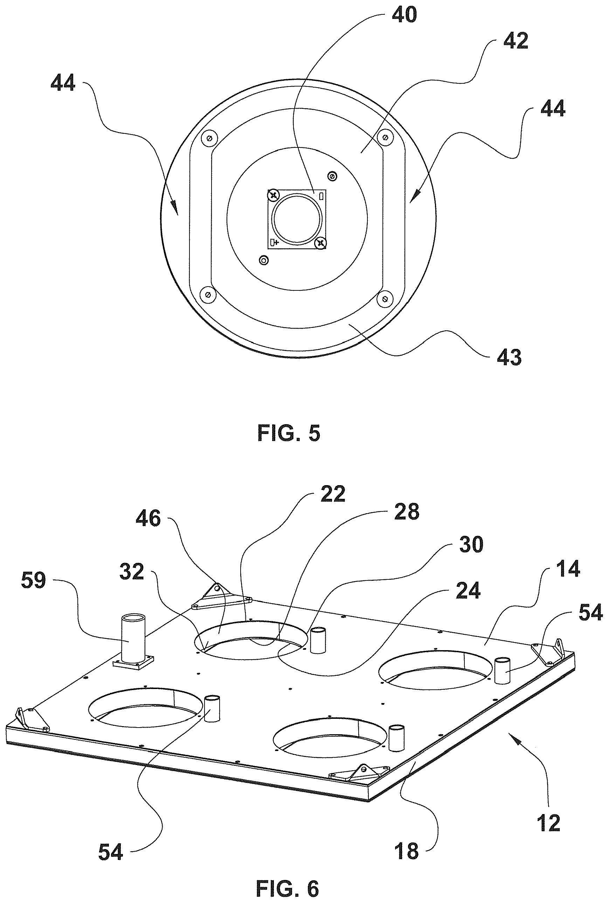

Wie insbesondere anhand der Fign. 3 und 6 zu erkennen ist, weist das Leuchtengehäuse 12 in diesem Ausführungsbeispiel vier Paare von miteinander fluchtenden Aufnahmeöffnungen 22, 24 auf. Die Aufnahmeöffnungen 22 befinden sich in der Oberseiten-Gehäusewand 14 und sind in diesem Ausführungsbeispiel kreisrund. Fluchtend mit jeder Aufnahmeöffnung 22 der Oberseiten-Gehäusewand 14 ist eine Aufnahmeöffnung 24 in der Unterseiten-Gehäusewand 16 ausgebildet. Die Aufnahmeöffnungen 24 weisen jeweils zwei Öffnungsrandabschnitte 26 auf, innerhalb derer der Öffnungsrand 28 einer Aufnahmeöffnung 24 der Unterseiten-Gehäusewand 16 über den Öffnungsrand 30 der zugehörigen Aufnahmeöffnung 22 der Oberseiten-Gehäusewand 14 vorsteht. Die Öffnungsrandabschnitte 26 bilden somit Auflageflächen 32, auf denen jeweils ein Lampenmodul 34 ruht, welches in das Paar von Aufnahmeöffnungen 22, 24 eingesetzt ist.

In den Fign. 1 und 2 sind vier solche Lampenmodule 34 gezeigt. Das Lampenmodul 34 ist darüber hinaus in Seitenansicht und in Explosionsdarstellung in Fig. 4 und in Vorderansicht in Fig. 5 gezeigt. Es weist gemäß Fig. 4 einen zylindrischen Kühlkörper 36 auf, der eine Montagefläche 38 aufweist, von der in an sich bekannter Weise Kühlfahnen radial abstehen. An der Montagefläche 38 befindet sich thermisch gut angebunden eine Lichtquelle 39 in Form eines LED-(COB-)Chips 40, der eine Vielzahl von LEDs aufweist. An der Montagefläche 38 liegt darüber hinaus ein optisches Element 37 in Form einer optischen Linse 42 an. Das von dem LED-Chip 40 abgegebene Licht gelangt direkt in die optische Linse 42, durch die es in einem durch die Beschaffenheit und Geometrie der optischen Linse 42 definierten Abstrahlwinkel im Raum abgestrahlt wird. Die Linse 42 weist einen Dichtflansch 41 auf, der von einem an seiner Außenseite ovalen Halter 43 umgriffen ist, der mit dem Kühlkörper 36 z.B. durch Verschraubung verbunden ist und durch den die Linse 42 gegen den Kühlkörper 36 geklemmt gehalten sowie der Bereich zwischen der Linse 42 und dem Kühlkörper 36 um den LED-Chip 40 herum spritzwassergeschützt ist.

Wie anhand von Fig. 5 zu erkennen ist, befinden sich an der Vorderseite jedes Lampenmoduls 34, d.h. an der Montagefläche 38 des Kühlkörpers 36 jedes Lampenmoduls 34 außerhalb des Linsenhalters 43 zwei diametral gegenüberliegende Abstützflächen 44, die bei in ein Aufnahmeöffnungspaar eingesetztem Lampenmodul 34 auf den Auflageflächen 32 aufliegen und somit ein "Durchfallen" der Lampenmodule 34 durch die Paare von Aufnahmeöffnungen verhindern.

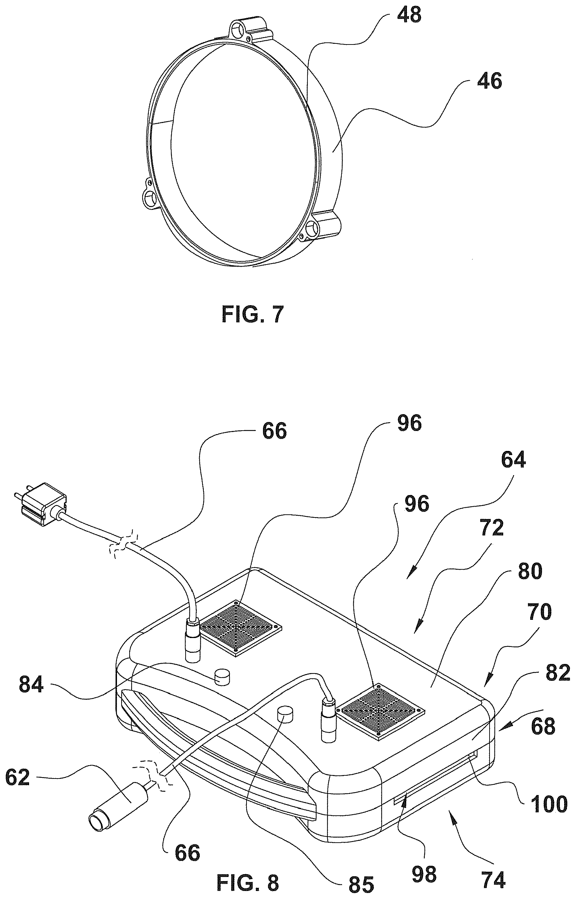

Wie anhand von Fig. 6 zu erkennen ist, ist der Zwischenraum zwischen den beiden Aufnahmeöffnungen 22 und 24 eines jeden Paars von Aufnahmeöffnungen durch einen Zylinderring 46 überbrückt, der perspektivisch in Fig. 7 gezeigt ist. Die axiale Höhe dieses Zylinderrings 46 ist gleich der Höhe des Leuchtengehäuses 12. Der Zylinderring 46 weist an seinen stirnseitigen Schmalenden elastische Dichtringe 48 auf, die z.B. in Nuten des Zylinderrings 46 eingesetzt sind und die der spritzwassergeschützten Abdichtung des Zylinderrings 46 zu den Öffnungsrändern 28, 30 der beiden Aufnahmeöffnungen 22, 24 dienen. Jeder Zylinderring 46 ist durch Verschraubung am Leuchtengehäuse 12 befestigt, und zwar manipulationssicher.

Wie insbesondere anhand von Fign. 1 und 2 zu erkennen ist, ist jedes Lampenmodul 34 mit einem Anschlusskabel 49 versehen, an dessen Ende sich der Stecker 50 eines Lampenmodul-Verbinders 52 befindet, der ferner eine Steckerbuchse 54 aufweist, die an der Oberseiten-Gehäusewand 14 nach oben abstehend angeordnet ist. Am hinteren Ende des Kühlkörpers 36 befindet sich eine Klemme 55 als Zugentlastung für das Anschlusskabel 49 (siehe auch Fig. 4). Innerhalb des Leuchtengehäuses 12 befindet sich pro Lampenmodul 34 ein Gleichspannungswandler 56, wobei die Gleichspannungswandler 56 elektrisch mit jeweils einer anderen der Steckerbuchsen 54 verbunden sind. Die Gleichspannungswandler 56 sind ihrerseits mit einem Zuleitungsverbinder 58 verbunden, der ein an der Oberseiten-Gehäusewand 14 angeordnetes Steckerteil 59 aufweist, und zwar für den Anschluss einer Zu-/Steuerleitung 60 einer Energieversorgungs- und Steuereinheit 64, wobei die Zu-/Steuerleitung 60 das Steckerbuchsenteil 62 des Zuleitungs(-steck-)verbinders 58 aufweist.

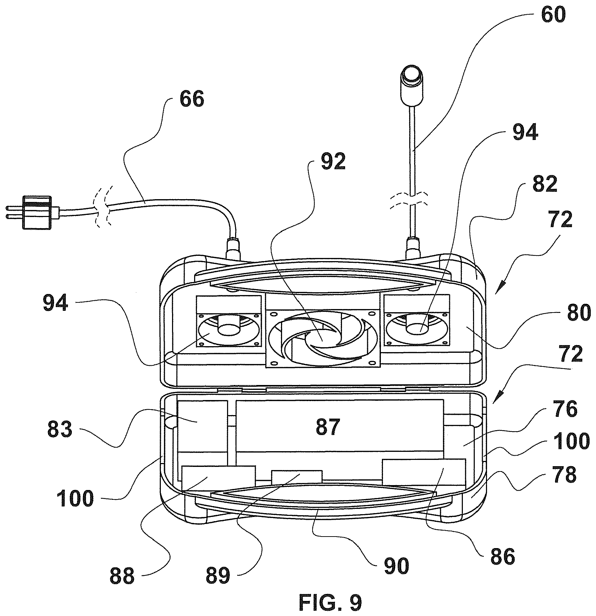

Außerhalb des Leuchtengehäuses 12 befindet sich die Energieversorgungsund Steuereinheit 64 (d.h. das Vorschaltgerät) für die Lampenmodule 34, die über ein Netzkabel 66 an das allgemeine Energieversorgungsnetz anschließbar ist und ihrerseits über die Zu-/Steuerleitung 60 mit dem Leuchtengehäuse 12 verbindbar ist. Die Energieversorgungs- und Steuereinheit 64 weist einen aufklappbaren Koffer 68 als Box oder Gehäuse 70 auf, der ein Oberteil 72 und ein Unterteil 74 aufweist. Das Unterteil 74 umfasst eine Bodenwand 76 (siehe die Fign. 8 und 9) und eine umlaufende Seitenwand 78, die von der Bodenwand 76 aufragt. Auch das Oberteil 72 weist eine Deckelwand 80 mit von dieser aufragenden umlaufenden Seitenwand 82 auf.

In dem Unterteil 74 befinden sich elektrische und elektronische Komponenten der Energieversorgungs- und Steuereinheit 64, bei denen es sich um einen AC/DC-Spannungswandler 83, ein Zwei-Kanal-Relais 88, einen Niederspannungstreiber 87, eine Lüftersteuerung 86 und eine Bluetooth-Steuerung 89 handelt. Diese Komponenten erzeugen im Betrieb Verlustwärme, die aus dem Koffer 68 abgeführt werden muss. Der Koffer 68 besteht typischerweise aus Kunststoff und weist z.B. einen zweigeteilten Haltegriff 90 auf. Um die Verlustwärme abzuführen, weist der Koffer 68 an der Innenseite seiner Deckelwand 80 ein Lüfterrad 92 auf, das innerhalb des Koffers 68 für Luftverwirbelung sorgt. Die auf diese Weise verwirbelte Luft wird über in diesem Ausführungsbeispiel zwei Abluftventilatoren 94 nach außen abgeführt. Die in der Deckelwand 80 befindlichen Öffnungen dieser beiden Abluftventilatoren 94 sind mit Gittern 96 versehen.

Als Zuluftführung zum Innern des Koffers 68 dienen ein oder mehrere Zuluftöffnungen 98, die als Randaussparung(en) 100 in der Seitenwand 78 des Unterteils 74 ausgebildet sind. Je nach Ausgestaltung des Koffers 68 kann auf eine solche Konstruktion für die Luftzufuhr verzichtet werden, und zwar vornehmlich dann, wenn der Koffer 68 nicht dicht schließt, so dass bei geschlossenem Koffer 68 durch den durch die Abluftventilatoren 94 erzeugten Unterdruck im Innern des Koffers 68 dennoch Luft über den wenn auch recht schmalen Spalt zwischen Oberteil 72 und Unterteil 74 des Koffers 68 angesaugt wird.

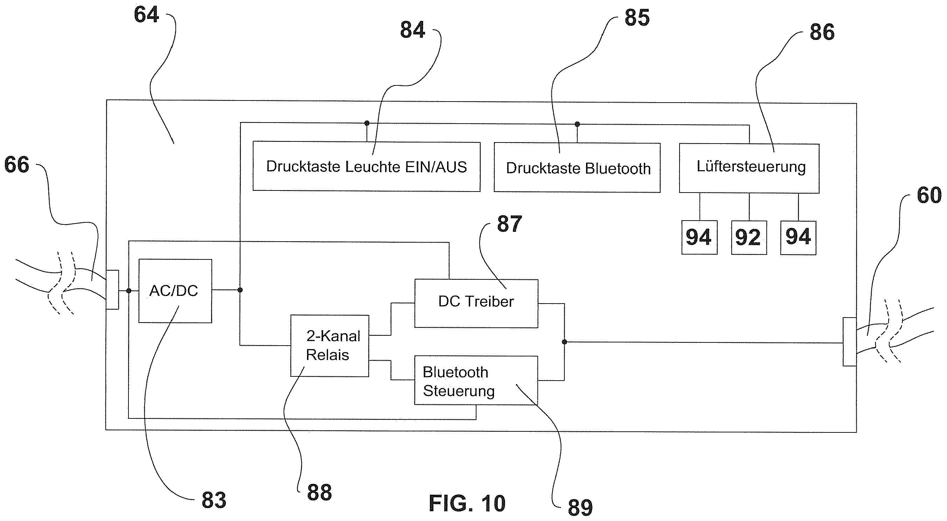

In Fig. 10 sind die Hauptkomponenten der Energieversorgungs- und Steuereinheit 64 als Blockschaltbild gezeigt. Ein Spannungswandler 83 wandelt die Netzspannung von typischerweise 220 Volt in die interne Betriebsspannung von beispielsweise 12 V DC für die Komponenten der Energieversorgungs- und Steuereinheit 64 um und liefert überdies die Spannung für den Betrieb der Lampenmodule 34. Mit dieser Betriebsspannung werden zwei beleuchtete Drucktasten, nämlich die EIN/AUS-Drucktaste 84 und eine weitere Drucktaste 85 zur wahlweisen Aktivierung einer Bluetooth-Steuerung betrieben, die, wie in Fig. 8 gezeigt, am Oberteil 72 des Koffers 68 angeordnet sind. Ferner können noch Gerätschutzschalter für die Primärseite des Vorschaltgeräts und dessen Sekundärseite, d.h. für die Lampenmodule 34 vorgesehen sein. Als weitere Komponente weist die Energieversorgungs- und Steuereinheit 64 eine Lüftersteuerung 86 auf, die beispielsweise das Lüfterrad 92 sowie die beiden Abluftventilatoren 94 temperaturabhängig steuert und in dem Oberteil 80 (aber ebenso gut auch im Unterteil 74) des Koffers 68 untergebracht sein kann.

Ferner weist die Energieversorgungs- und Steuereinheit 64 einen Niedervolttreiber 87 für die Gleichspannung zum Betrieb der Lampenmodule 34 auf, der bei Betätigung der Drucktaste 84 über ein mit der Betriebsspannung von z.B. 12 V DC betriebenes Zwei-Kanal-Relais 88 angesteuert wird. Der Spannungswandler 83 und der Niedervolttreiber 87 sind letztendlich eine gemeinsame elektrische/elektronische Komponente der Energie- und Versorgungseinheit 64. Bei aktivierter Bluetooth-Steuerung (Drucktaste 85) kann die Feuchtraumleuchte 10 über eine App eines beispielsweise Smartphone gesteuert werden. Hierzu dient ein Bluetooth-Steuerungsbauteil 89. Die gesamten elektrischen/elektronischen Komponenten im Unterteil 74 des Koffers 68 sind auf einer Montageplatte vormontiert und miteinander verdrahtet, so dass die Montageplatte als Einheit in das Unterteil 74 des Koffers 68 eingesetzt und in diesem montiert werden kann.

### BEZUGSZEICHENLISTE

- 10: Feuchtraumleuchte
- 12: Leuchtengehäuse
- 14: Oberseiten-Gehäusewand
- 16: Unterseiten-Gehäusewand
- 18: Gehäuseseitenwand
- 20: Strangelement
- 21: Seil
- 22: Aufnahmeöffnungen in der Oberseiten-Gehäusewand
- 24: Aufnahmeöffnungen in der Unterseiten-Gehäusewand
- 26: Öffnungsrandabschnitte
- 28: Öffnungsrand einer Aufnahmeöffnung in der Oberseiten-Gehäusewand
- 30: Öffnungsrand einer Aufnahmeöffnung in der Unterseiten-Gehäusewand
- 32: Auflageflächen
- 34: Lampenmodul
- 36: Kühlkörper
- 37: optisches Element
- 38: Montagefläche
- 39: Lichtquelle
- 40: LED-Chip
- 41: Dichtflansch der Linse
- 42: Linse
- 43: Linsenhalter
- 44: Abstützflächen
- 46: Zylinderring
- 48: Dichtring des Zylinderrings
- 49: Anschlusskabel
- 50: Steckverbinder-Steckerteil
- 52: Lampenmodul-Verbinder (Steckverbinder)
- 54: Steckerverbinder-Buchsenteil
- 55: Zugentlastungsklemme
- 56: Gleichspannungswandler
- 58: Zuleitungsverbinder (Steckverbinder)
- 59: Steckverbinder-Steckerteil
- 60: Zu-/Steuerleitung
- 62: Steckverbinder-Buchsenteil
- 64: Energieversorgungs- und Steuereinheit (Vorschaltgerät)
- 66: Netzkabel
- 68: Koffer
- 70: Gehäuse der Energieversorgungs- und Steuereinheit
- 72: Oberteil des Koffers
- 74: Unterteil des Koffers
- 76: Bodenwand des Unterteils
- 78: Seitenwand des Unterteils
- 80: Deckelwand des Oberteils
- 82: Seitenwand des Oberteils
- 83: AC/DC-Spannungswandler
- 84: EIN/AUS-Drucktaste
- 85: Bluetooth-Drucktaste
- 86: Lüftersteuerung
- 87: Niedervolttreiber
- 88: Zwei-Kanal-Relais
- 89: Bluetooth-Steuerungsbauteil
- 90: Haltegriff
- 92: Verwirbelungslüfterrad
- 94: Abluftventilator
- 96: Gitter
- 98: Zuluftöffnung
- 100: Randaussparung der Seitenwand des Unter- und/oder Oberteils des Koffers

## Patentansprüche

1. Feuchtraumleuchte, insbesondere Gewächshausleuchte, mit
- einem Leuchtengehäuse (12),
- mehreren in das Leuchtengehäuse (12) einsetzbaren Lampenmodulen (34),
- wobei jedes Lampenmodul (34) eine Lichtquelle (39) mit einer Vielzahl von LEDs, ein zur Lichtquelle (39) führendes Anschlusskabel, einen an einem hinteren Ende des Lampenmoduls (34) angeordneten Kühlkörper (36) zum Kühlen der Lichtquelle (39) und ein an einem vorderen Ende des Lampenmoduls (34) angeordnetes optisches Element (42) zum Ausstrahlen des Lichts der Lichtquelle (39) in einen räumlichen Ausstrahlwinkel aufweist,
- wobei das Leuchtengehäuse (12) eine Oberseiten-Gehäusewand (14), eine Unterseiten-Gehäusewand (16) und eine diese beiden Gehäusewände (14, 16) verbindende, den Zwischenraum zwischen den beiden Gehäusewänden (14, 16) nach außen spritzwassergeschützt verschließende, umlaufende Gehäuseseitenwand (18) aufweist,
- wobei in der Oberseiten-Gehäusewand (14) und in der Unterseiten-Gehäusewand (16) mehrere Paare von miteinander fluchtenden, jeweils einen Öffnungsrand (28, 30) aufweisenden Aufnahmeöffnungen (22, 24) für jeweils ein Lampenmodul (34) ausgebildet sind,
- einem pro Paar von Aufnahmeöffnungen (22, 24) zwischen der Oberseiten-Gehäusewand (14) und der Unterseiten-Gehäusewand (16) angeordneten, die beiden Aufnahmeöffnungen (22, 24) umgebenden Zylinderring (46) zum spritzwassergeschützten Verschließen des Zwischenraums zwischen der Oberseiten-Gehäusewand (14) und der Unterseiten-Gehäusewand (16) des Leuchtengehäuses (12),
- wobei jedes Lampenmodul (34) in ein Paar von Aufnahmeöffnungen (22, 24) einsetzbar ist, wobei das Lampenmodul (34) an seinem vorderen Ende auf zumindest einem Abschnitt (26) des Öffnungsrandes (28) der Aufnahmeöffnung (24) der Unterseiten-Gehäusewand (16) aufliegt und sein hinteres Ende mit dem Kühlkörper (36) über die Oberseiten-Gehäusewand (14) überstehend angeordnet ist,
- einer Energieversorgungs- und Steuereinheit (64) für die Lampenmodule (34), die außerhalb des Leuchtengehäuses (12) angeordnet ist und
- mehreren außen an dem Leuchtengehäuse (12) angeordneten und elektrisch mit der Energieversorgungs- und Steuereinheit (64) verbundenen elektrischen Lampenmodul-Verbindern (52) mit jeweils einer Steckerbuchse (54) und einem von der Steckerbuchse (54) lösbaren und mit dieser verbindbaren Stecker (62) für jedes Lampenmodul (34) zum Verbinden des Anschlusskabels jedes Lampenmoduls (34) mit der Energieversorgungs- und Steuereinheit (64).

2. Feuchtraumleuchte nach Anspruch 1, **dadurch gekennzeichnet, dass** die umlaufende Gehäusewand (18) zu der Oberseiten-Gehäusewand (14) und der Unterseiten-Gehäusewand (16) durch elastische Dichtelemente, insbesondere Dichtringe oder Dichtbänder, oder durch einen Kleber abgedichtet ist.

3. Feuchtraumleuchte nach Anspruch 1 oder 2, **dadurch gekennzeichnet, dass** jeder Zylinderring zu der Oberseiten-Gehäusewand (14) und der Unterseiten-Gehäusewand (16) durch elastische Dichtelemente, insbesondere Dichtringe oder Dichtbänder, oder durch einen Kleber abgedichtet ist.

4. Feuchtraumleuchte nach Anspruch 3, **dadurch gekennzeichnet, dass** jedes Lampenmodul (34) eine im Wesentlichen zylindrische Umfangswand zwischen seinem vorderen Ende und seinem hinteren Ende aufweist.

5. Feuchtraumleuchte nach einem der Ansprüche 1 bis 4, **dadurch gekennzeichnet, dass** bei Betrachtung der beiden Aufnahmeöffnungen (22, 24) eines Paars von Aufnahmeöffnungen (22, 24) bei deren miteinander fluchtenden Ausrichtung die Aufnahmeöffnung (24) in der Unterseiten-Gehäusewand (16) mindestens einen Öffnungsrandabschnitt (26) aufweist, der über den Öffnungsrand (28) der Aufnahmeöffnung (22) der Oberseiten-Gehäusewand (14) vorsteht und eine Auflagefläche (32) für ein in die beiden Aufnahmeöffnungen (22, 24) einsetzbares Lampenmodul (34) bildet.

6. Feuchtraumleuchte nach Anspruch 5, **dadurch gekennzeichnet, dass** die Aufnahmeöffnung (24) in der Unterseiten-Gehäusewand (16) mindestens zwei vorzugsweise einander gegenüberliegende und insbesondere diametral gegenüberliegende Öffnungsrandabschnitte (26) aufweist, die jeweils bis über den Öffnungsrand (28) der Aufnahmeöffnung (22) der Oberseiten-Gehäusewand (14) vorstehen und jeweils eine Auflagefläche (32) für ein in die beiden Aufnahmeöffnungen (22, 24) einsetzbares Lampenmodul (34) bilden.

7. Feuchtraumleuchte nach einem der Ansprüche 1 bis 6, **gekennzeichnet durch** in dem Leuchtengehäuse (12) angeordnete, mit den elektrischen Lampenmodul-Verbindern (52) verbundene Treiberschaltungen (56) und/oder Spannungswandler für jeweils ein Lampenmodul (34) oder jeweils einer Gruppe von Lampenmodulen (34), wobei die Treiberschaltungen (56) und/oder Spannungswandler mit der externen Energieversorgungs- und Steuereinheit (64) ansteuerbar und verbindbar sind.

8. Feuchtraumleuchte nach einem der Ansprüche 1 bis 7, **gekennzeichnet durch** einen an dem Leuchtengehäuse (12) angeordneten elektrischen Zuleitungsverbinder (58) mit einer Steckerbuchse (54) und mit einem von der Steckerbuchse (54) lösbaren und mit dieser verbindbaren Stecker (62) für die elektrische Verbindung der Energieversorgungs- und Steuereinheit (64) mit den Lampenmodulen (34) oder, sofern vorhanden, mit den Treiberschaltungen (56) und oder Spannungswandler des Leuchtengehäuses (12).

9. Feuchtraumleuchte nach einem der Ansprüche 1 bis 8, **dadurch gekennzeichnet, dass** die elektrischen Lampenmodul-Verbinder (52) an der Oberseiten-Gehäusewand (14) des Leuchtengehäuses (12) angeordnet sind.

10. Feuchtraumleuchte nach einem der Ansprüche 1 bis 9, **gekennzeichnet durch** eine an dem Leuchtengehäuse (12) angeordnete Anbringungseinheit zur von einer Deckenkonstruktion oder Haltekonstruktion herabhängenden Anordnung des Leuchtengehäuses (12), wobei die Anbringungseinheit insbesondere an dem Leuchtengehäuse (12) montierbare Schnüre, Ketten, Bänder o.dgl. Strangelemente aufweist.

11. Feuchtraumleuchte nach einem der Ansprüche 1 bis 10, **dadurch gekennzeichnet, dass** das optische Element (37) ein optisch refraktives Element, insbesondere eine Linse (42), oder ein reflektives Element, insbesondere einen Reflektor, aufweist.

12. Modulares Feuchtraumleuchtensystem, insbesondere für Gewächshäuser, mit
- einer Feuchtraumleuchte (10) nach einem der vorhergehenden Ansprüche,
- mehreren Leuchtengehäusen (12) mit unterschiedlichen Anzahlen von Paaren von Aufnahmeöffnungen (22, 24),
- wobei die Lampenmodule (34) wahlweise in eines der mehreren Leuchtengehäuse (12) einsetzbar sind.

13. Modulares Feuchtraumleuchtensystem nach Anspruch 12, **gekennzeichnet durch** mehrere Energieversorgungs- und Steuereinheiten (64) mit unterschiedlichen Nenn-Ausgangsleistungen für die Versorgung der verschieden großen Anzahl von Lampenmodulen (34) der verschiedenen Leuchtengehäuse (12).

14. Modulares Feuchtraumleuchtensystem nach Anspruch 12 oder 13, **dadurch gekennzeichnet, dass** die elektrischen Zuleitungsverbinder (58) der einzelnen Leuchtengehäuse (12) unterschiedlich ausgebildet und/oder unterschiedlich mechanisch kodiert sind.

## Claims

1. Moisture-proof lamp, in particular a greenhouse lamp, comprising:
- a lamp housing (12),
- a plurality of light modules (34) adapted for insertion into the lamp housing (12),
- each light module (34) comprising a light source (39) with a plurality of LEDs, a connection cable leading to the light source (39), a heat sink (36) arranged at a rear end of the light module (34) for cooling the light source (39), and an optical element (42) arranged at a front end of the light module (34) for irradiating the light of the light source (39) under a spatial beam angle,
- the lamp housing (12) comprising a top housing wall (14), a bottom housing wall (16) and a circumferential housing side wall (18) connecting these two housing walls (14, 16) and sealing the space between the two housing walls (14, 16) to the outside in a splash-proof manner,
- a plurality of pairs of receiving openings (22, 24) for one respective light module (34) being formed in the upper housing wall (14) and the lower housing wall (16), said receiving openings being aligned with each other and each having an opening edge (28, 30),
- a cylinder ring (46) arranged, per pair of receiving openings (22, 24), between the upper housing wall (14) and the lower housing wall (16) and surrounding the two receiving openings (22, 24), said cylinder ring sealing the space between the upper housing wall (14) and the lower housing wall (16) of the lamp housing (12) in a splash-proof manner,
- each light module (34) being adapted for insertion into a pair of receiving openings (22, 24), the front end of the light module (34) resting on at least a section (26) of the opening edge (28) of the receiving opening (24) of the bottom housing wall (16) and its rear end is arranged protruding beyond the upper housing wall (14) by the heat sink (36),
- a power supply and control unit (64) for the light modules (34), which is arranged outside the lamp housing (12), and
- a plurality of electrical light module connectors (52) arranged outside of the lamp housing (12) and electrically connected to the power supply and control unit (64), each connector comprising, for each light module (34), a receptacle (54) and a plug (62) adapted to be detached from and connected to the receptacle (54) for connecting the connection cable of each light module (34) to the energy supply and control unit (64).

2. Moisture-proof lamp according to claim 1, **characterized in that** the circumferential housing wall (18) is sealed to the upper housing wall (14) and the lower housing wall (16) by elastic sealing elements, in particular sealing rings or sealing strips, or by an adhesive.

3. Moisture-proof lamp according to claim 1 or 2, **characterized in that** each cylinder ring is sealed to the upper housing wall (14) and the lower housing wall (16) by elastic sealing elements, in particular sealing rings or sealing strips, or by an adhesive.

4. Moisture-proof lamp according to claim 3, **characterized in that** each light module (34) comprises an essentially cylindrical circumferential wall between its front end and its rear end.

5. Moisture-proof lamp according to any one of claims 1 to 4, **characterized in that** when viewing the two receiving openings (22, 24) of a pair of receiving openings (22, 24) in their mutually aligned arrangement, the receiving opening (24) in the lower housing wall (16) has at least one opening edge section (26) which protrudes beyond the opening edge (28) of the receiving opening (22) in the upper housing wall (14) and forms a supporting surface (32) for a light module (34) insertable into the two receiving openings (22, 24).

6. Moisture-proof lamp according to claim 5, **characterized in that** the receiving opening (24) in the bottom housing wall (16) has at least two preferably opposite and in particular diametrically opposite opening edge sections (26), each protruding beyond the opening edge (28) of the receiving opening (22) of the upper housing wall (14) and each forming a supporting surface (32) for a light module (34) insertable into the two receiving openings (22, 24).

7. Moisture-proof lamp according to any one of claims 1 to 6, **characterized by** driver circuits (56) arranged in the lamp housing (12) and connected to the electric lamp module connectors (52) and/or voltage converters for one light module (34), respectively, or for a group of light modules (34), respectively, the driver circuits (56) and/or voltage converters being controllable by and connectable to the external power supply and control unit (64).

8. Moisture-proof lamp according to any one of claims 1 to 7, **characterized by** an electrical supply connector (58) arranged on the lamp housing (12), which comprises a receptacle (54) and a plug (62) adapted to be detached from and connected to the receptacle (54) for the electrical connection of the power supply and control unit (64) to the light modules (34) or, if provided, to the driver circuits (56) and/or the voltage converters of the lamp housing (12).

9. Moisture-proof lamp according to any one of claims 1 to 8, **characterized in that** the electrical light module connectors (52) are arranged on the upper housing wall (14) of the lamp housing (12).

10. Moisture-proof lamp according to any one of claims 1 to 9, **characterized by** an attachment unit arranged on the lamp housing (12) for arranging the lamp housing (12) suspended from a ceiling structure or a holding structure, the attachment unit comprising in particular cords, chains, bands or the like strand elements adapted to be attached to the lamp housing (12).

11. Moisture-proof lamp according to any one of claims 1 to 10, **characterized in that** the optical element (37) comprises an optically refractive element, in particular a lens (42), or a reflective element, in particular a reflector.

12. Modular moisture-proof lamp system, in particular for greenhouses, comprising
- a moisture-proof lamp (10) according to one of the preceding claims,
- a plurality of lamp housings (12) with different numbers of pairs of receiving openings (22, 24),
- the light modules (34) being selectively insertable into one of the plurality of lamp housings (12).

13. Modular moisture-proof lamp system according to claim 12, **characterized by** a plurality of power supply and control units (64) with different rated output powers for supplying the different numbers of lamp modules (34) of the different lamp housings (12).

14. Modular moisture-proof lamp system according to claim 12 or 13, **characterized in that** the electrical supply connectors (58) of the individual lamp housings (12) are differ in design and/or in mechanical coding.

## Revendications

1. Luminaire pour locaux humides, en particulier luminaire pour serres, avec
- un corps de luminaire (12),
- plusieurs modules de lampe (34) pouvant être placés dans le corps de luminaire (12),
- chaque module de lampe (34) comportant une source de lumière (39) avec une multiplicité de LED, un câble de raccordement conduisant à la source de lumière (39), un dissipateur de chaleur (36), disposé à une extrémité arrière du module de lampe(34) et destiné au refroidissement de la source de lumière (39), et un élément (42) optique disposé à une extrémité avant du module de lampe(34) et destiné à l'émission de la lumière de la source de lumière (39) sous un angle d'émission spatial,
- le corps de luminaire (12) comportant une paroi de corps en face supérieure (14), une paroi de corps en face inférieure (16) et une paroi latérale de corps (18) périphérique raccordant ces deux parois de corps (14, 16) et fermant l'espace intermédiaire entre les deux parois de corps (14, 16) de façon à le protéger des projections d'eau de l'extérieur,
- plusieurs paires d'ouvertures de réception (22, 24) pour respectivement un module de lampe (34), comportant respectivement un bord d'ouverture (28, 30) et alignées les unes avec les autres, étant constituées dans la paroi de corps en face supérieure (14) et dans la paroi de corps en face inférieure (16),
- avec une bague cylindrique (46), disposée par paire d'ouvertures de réception (22, 24) entre la paroi de corps en face supérieure (14) et la paroi de corps en face inférieure (16) et entourant les deux ouvertures de réception (22, 24), et destinée à fermer l'espace intérieure entre la paroi de corps en face supérieure (14) et la paroi de corps en face inférieure (16) du corps de luminaire (12) en le protégeant contre les projections d'eau,
- chaque module de lampe(34) pouvant être placé dans une paire d'ouvertures de réception (22, 24), le module de lampe (34) reposant, à son extrémité avant, sur au moins un tronçon (26) du bord d'ouverture (28) de l'ouverture de réception (24) de la paroi de corps en face inférieure (16), et son extrémité arrière avec le dissipateur de chaleur (36) étant disposée en saillie par rapport à la paroi de corps en face supérieure (14),
- avec une unité d'alimentation en énergie et de commande (64) pour les modules de lampe (34), qui est disposée à l'extérieur du corps de luminaire (12), et
- avec plusieurs jonctions de modules de lampe (52) électriques disposées à l'extérieur sur le corps de luminaire (12) et connectées électriquement à l'unité d'alimentation en énergie et de commande (64), avec respectivement un contact femelle (54) et un contact mâle (62) pouvant être enlevé du contact femelle (54) et connecté à celui-ci pour chaque module de lampe(34) pour la connexion du câble de raccordement de chaque module de lampe(34) à l'unité d'alimentation en énergie et de commande (64).

2. Luminaire pour locaux humides selon la revendication 1, **caractérisé en ce que** la paroi de corps (18) périphérique est rendue étanche vis-à-vis de la paroi de corps en face supérieure (14) et de la paroi de corps en face inférieure (16) par des éléments d'étanchéité élastiques, en particulier des bagues d'étanchéité ou des bandes d'étanchéité, ou par un adhésif.

3. Luminaire pour locaux humides selon la revendication 1 ou 2, **caractérisé en ce que** chaque bague cylindrique est rendue étanche vis-à-vis de la paroi de corps en face supérieure (14) et de la paroi de corps en face inférieure (16) par des éléments d'étanchéité élastiques, en particulier des bagues d'étanchéité ou des bandes d'étanchéité, ou par un adhésif.

4. Luminaire pour locaux humides selon la revendication 3, **caractérisé en ce que** chaque module de lampe(34) comporte une paroi périphérique essentiellement cylindrique entre son extrémité avant et son extrémité arrière.

5. Luminaire pour locaux humides selon l'une des revendications 1 à 4, **caractérisé en ce que**, lorsqu'on observe les deux ouvertures de réception (22, 24) d'une paire d'ouvertures de réception (22, 24) lorsqu'elles sont orientées en alignement l'une avec l'autre, l'ouverture de réception (24) dans la paroi de corps en face inférieure (16) comporte au moins un tronçon de bord d'ouverture (26) qui fait saillie par rapport au bord d'ouverture (28) de l'ouverture de réception (22) de la paroi de corps en face supérieure (14) et forme une surface d'appui (32) pour un module de lampe(34) pouvant être placé dans les deux ouvertures de réception (22, 24).

6. Luminaire pour locaux humides selon la revendication 5, **caractérisé en ce que** l'ouverture de réception (24) dans la paroi de corps en face inférieure (16) comporte au moins deux tronçons de bord d'ouverture (26) de préférence opposés et en particulier diamétralement opposés qui font saillie respectivement jusqu'au-dessus du bord d'ouverture (28) de l'ouverture de réception (22) de la paroi de corps en face supérieure (14) et forment respectivement une surface d'appui (32) pour un module de lampe(34) pouvant être placé dans les deux ouvertures de réception (22, 24).

7. Luminaire pour locaux humides selon l'une des revendications 1 à 6, **caractérisé par** des circuits d'attaque (56) disposés dans le corps de luminaire (12) et connectés aux jonctions de modules de lampe (52) électriques et/ou par des transformateurs de tension pour respectivement un module de lampe (34) ou respectivement un groupe de modules de lampe (34), les circuits d'attaque (56) et/ou transformateurs de tension pouvant être pilotés et connectés avec l'unité d'alimentation en énergie et de commande (64) externe.

8. Luminaire pour locaux humides selon l'une des revendications 1 à 7, **caractérisé par** un connecteur d'alimentation (58) électrique disposé sur le corps de luminaire (12) et doté d'un contact femelle (54) et d'un contact mâle (62), pouvant être détaché du contact femelle (54) et être connecté à celui-ci, pour la connexion électrique de l'unité d'alimentation en énergie et de commande (64) avec les modules de lampe (34) ou, s'ils sont présents, avec les circuits d'attaque (56) et ou par des transformateurs de tension du corps de luminaire (12).

9. Luminaire pour locaux humides selon l'une des revendications 1 à 8, **caractérisé en ce que** les jonctions de modules de lampe (52) électriques sont disposées sur la paroi de corps en face supérieure (14) du corps de luminaire (12).

10. Luminaire pour locaux humides selon l'une des revendications 1 à 9, **caractérisé par** une unité d'installation, disposée sur le corps de luminaire (12), pour la disposition du corps de luminaire (12) de façon suspendue à une structure de plafond ou à une structure de retenue, l'unité d'installation comportant en particulier des fils, des chaînes, des rubans ou des éléments de corde similaires pouvant être montés sur le corps de luminaire (12).

11. Luminaire pour locaux humides selon l'une des revendications 1 à 10, **caractérisé en ce que** l'élément optique (37) comporte un élément optiquement réfractif, en particulier une lentille (42), ou un élément réflectif, en particulier un réflecteur.

12. Système modulaire de luminaire pour locaux humides, en particulier pour serres, avec
- un luminaire pour locaux humides (10) selon l'une des revendications précédentes,
- plusieurs corps de luminaire (12) avec des nombres différents de paires d'ouvertures de réception (22, 24),
- les modules de lampe (34) pouvant être placés au choix dans l'un des plusieurs corps de luminaire (12).

13. Système modulaire de luminaire pour locaux humides selon la revendication 12, **caractérisé par** plusieurs unités d'alimentation en énergie et de commande (64) avec différentes puissances de sortie nominales pour l'alimentation de la quantité différente de modules de lampe (34) des différents corps de luminaire (12).

14. Système modulaire de luminaire pour locaux humides selon la revendication 12 ou 13, **caractérisé en ce que** les connecteurs d'alimentation (58) électriques des différents corps de luminaire (12) sont constitués de façon différente et/ou sont codés mécaniquement de façon différente.
